# EUROPEAN PATENT SPECIFICATION

(11) **EP 4 056 902 B1**
(45) Date of publication and mention of the grant of the patent: **26.03.2025**
(21) Application number: 22154640.1
(22) Date of filing: 01.02.2022
(51) Int. Cl.: F23R 3/28, F23D 14/24

(54) **FUEL MIXER**
BRENNSTOFFMISCHER
MÉLANGEUR DE CARBURANT

(30) Priority: 11.03.2021 US 202117199244
(43) Date of publication of application: 14.09.2022
(73) Proprietor: General Electric Company, Evendale, OH 45215 (US)
(72) Inventor: KEDIYA, Vishal Sanjay, 560066 Bengaluru (IN); NAIK, Pradeep, 560066 Bengaluru (IN); BOARDMAN, Gregory, Liberty Township, 45044 (US); GIRIDHARAN, Manampathy, West Chester, 45069 (US)
(74) Representative: Openshaw & Co.

(56) References cited:
- WO-A1-2013/091634
- JP-A- S60 129 516
- US-A1- 2008 078 160
- US-A1- 2010 058 732
- US-A1- 2010 269 507
- US-A1- 2012 291 439
- US-A1- 2018 128 490

## Description

### TECHNICAL FIELD

The present disclosure relates to a fuel mixer for a gas turbine engine. In particular, the present disclosure relates to a fuel mixer configured to blend hydrogen fuels.

### BACKGROUND

Current mixers for natural gas-powered turbine engines blend fuel with air to create a fuel-air mixture for providing to a combustor of the engine. The conventional mixers mix inlet air and inlet fuel to create the fuel-air mixture. The inlet air may be introduced to the combustor without imparting a swirl.

US 2010/269507 A1 relates to a radial lean direct injection burner.

US 2018/128490 A1 relates to a fuel injector for a gas turbine engine. The fuel injector includes an end wall, a centerbody, an outer sleeve surrounding the centerbody from the end wall toward the downstream end of the fuel injector, and a thermal management conduit. The centerbody includes an axially extended outer wall and inner wall extended from the end wall toward a downstream end of the fuel injector. The outer wall, the inner wall, and the end wall together define a fluid conduit extended in a first direction toward the downstream end of the fuel injector and in a second direction toward an upstream end of the fuel injector. The outer sleeve and the centerbody define a premix passage radially therebetween and an outlet at the downstream end of the premix passage. The outer sleeve defines a plurality of radially oriented first air inlet ports in circumferential arrangement at a first axial portion of the outer sleeve. The outer sleeve defines a plurality of radially oriented second air inlet ports in circumferential arrangement at a second axial portion of the outer sleeve. The outer sleeve further defines a first fluid passage arranged between each first air inlet port and extended from the end wall. A fluid passage wall extends from the end wall within the first fluid passage to define a second fluid passage extended from the end wall within the first fluid passage. The outer sleeve further defines a first injection port in fluid communication with the first fluid passage and a second injection port in fluid communication with the second fluid passage. The thermal management conduit is defined by the fluid communication of the fluid conduit and the first fluid passage and the thermal communication of the second fluid passage in adjacent arrangement with the first fluid passage.

### BRIEF SUMMARY

According to an embodiment, a mixer as claimed in claim 1.

Additional features, advantages, and embodiments of the disclosure are set forth or apparent from consideration of the following detailed description, drawings and claims. Moreover, it is to be understood that both the foregoing summary of the disclosure and the following detailed description are exemplary and intended to provide further explanation without limiting the scope of the disclosure as claimed.

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
FIG. 1 shows a schematic, cross-section view of a conventional mixer, according to an embodiment of the present disclosure.
FIG. 2 shows a schematic, perspective view of a mixer array, according to an embodiment of the present disclosure.
FIG. 3A shows a schematic, perspective view of a mixer, according to an embodiment of the present invention.
FIG. 3B shows a schematic view of the mixer of FIG. 3A taken along the section line A-A in FIG. 3A.
FIG. 3C shows a schematic view of the mixer of FIG. 3A taken along the section line B-B in FIG. 3A.
FIG. 3D shows a schematic view of the mixer of FIG. 3A taken along the section line C-C in FIG. 3A.
FIG. 4 shows a schematic, perspective view of a mixer, according to an embodiment of the present disclosure.
FIG. 5 shows a schematic, cross-section view of a mixer taken along a section line similar to B-B in FIG. 3A.
FIG. 6 shows a schematic, cross-section view of a mixer taken along a section line similar to C-C in FIG. 3A, not in accordance with the present invention.

### DETAILED DESCRIPTION

Various embodiments of the mixer are discussed in detail below. While specific embodiments are discussed, this is done for illustration purposes only. A person skilled in the relevant art will recognize that other components and configurations may be used. A mixer according to the invention is defined in the appended claims.

Current mixers present low-velocity pockets and fuel-air mixture in low velocity pocket on the wall of mixer part that may create flashback/flame-holding within mixer and may result in high temperatures that may damage the structure of the mixer and/or combustor. Thus, conventional mixers are not well suited for hydrogen and blends of hydrogen fuel due to the increased risk in flame-holding and high temperatures on mixer parts. A need exists for a mixer that may blend hydrogen fuels, at any percentage, and air to present safely to the combustor of an engine.

The mixer of the present disclosure may allow for fuel to be injected from a central (e.g., along a central axis extending longitudinally through a center point in the mixer) or radially offset distance relative to the mixer tube center line. The mixer may include three air flows that may be injected into the mixer tube. A central air flow may be injected along a passage that is parallel to the fuel flow. A first air flow may be introduced through aft, D-shaped forward swirling jet holes. A second air flow may be introduced through tangential circular or shaped air jets closer to the outer diameter of the mixer. The first air flow may generate a high velocity on a conic surface within the mixer tube. The second air flow may generate a high near wall velocity and may avoid fuel approaching the wall and the boundary layer flow. The mixer tube may generate a desired fuel/air distribution that may reduce flame-holding, reduce NOx and CO emissions, and allow for the burn of varying blends of hydrogen (H2) fuels.

The mixer of the present disclosure avoids low-velocity pockets and provide uniform mixing of the fuel and air. The mixer may be arranged such that the premixing length and residence time of the mixture within the mixer is lower, as compared to prior art mixers. The mixer of the present disclosure may provide enhanced mixing while maintaining the fuel, and thus the fuel-air mixture, away from the wall and boundary layer. The mixer of the present disclosure may allow for burn of any percentage of H2 fuel, including high percentage or 100% H2 fuel.

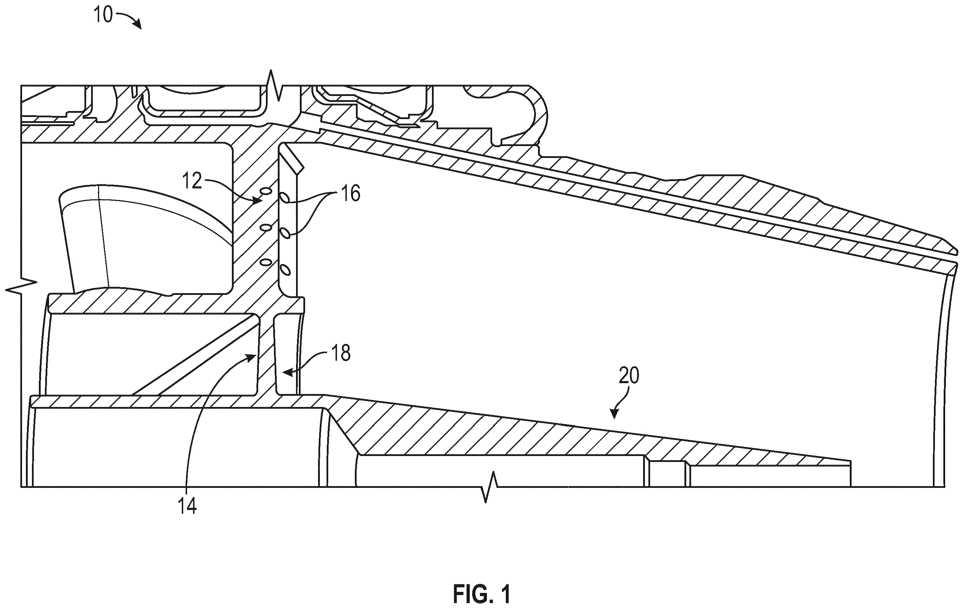

Referring to FIG. 1, a cross-section view of a conventional mixer 10 is shown. The mixer 10 may include an outer vane 12 and an inner vane 14. The outer vane 12 may include one or more openings 16. Fuel may be injected or introduced through the one or more openings 16. The inner vane 14 may include an opening 18. A swirling air flow may be injected or introduced through the opening 18. The swirling air flow from the inner vane 14 may separate on an outer surface of the center body 20. The passageways of the mixer 10 may be annular in cross-section as shown. The arrangement of the mixer 10 is not suitable for hydrogen (H2) fuels as the arrangement results in a re-circulation region on the outer surface of the center body 20 that may increase the flame-holding risk associated with H2 fuels. The length of the mixer 10 may be such that the residence time of the fuel-air mixture within the mixer 10 may result in a high flame-holding risk. The mixer 10 may result in low-velocity zones near the vanes. An arrangement such as the mixer 10 may allow lower volume of H2 fuel blending in a fuel.

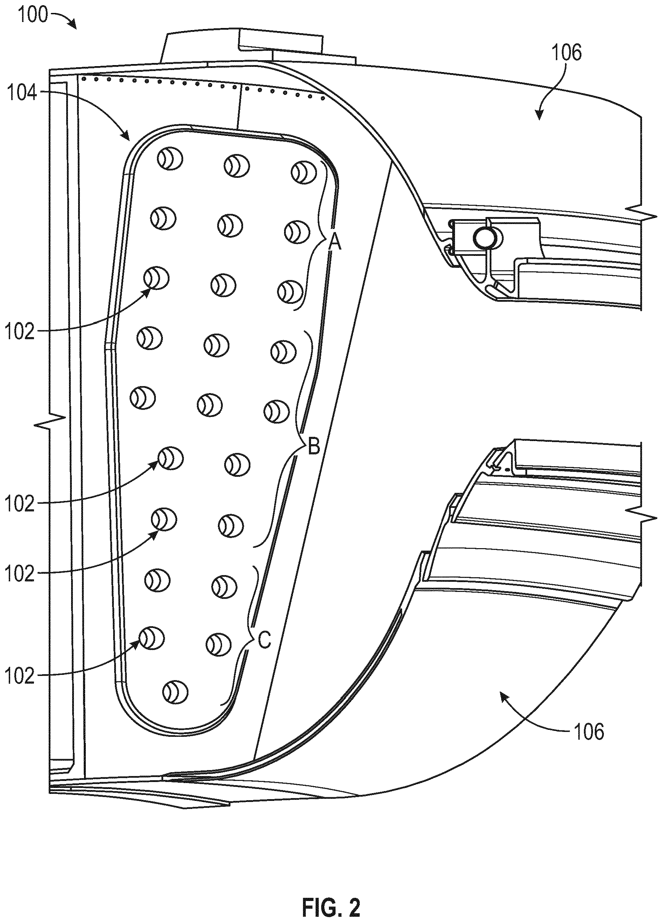

Referring to FIG. 2, a schematic, perspective view of a mixer array 100 is shown. The mixer array 100 may include one or more mixers 102. The mixer array 100 may be divided into one or more zones. For example, in FIG. 2, the mixer array 100 may be divided into multiple zones: viz zone A, zone B, and zone C, etc. The one or more mixers 102 provided in the zones A, B, and C may all be of the same construction, may all be of different construction, or may include some mixers of the same construction and some mixers of different construction. The mixer array 100 may be located on a support 104 coupled to a combustor liner 106.

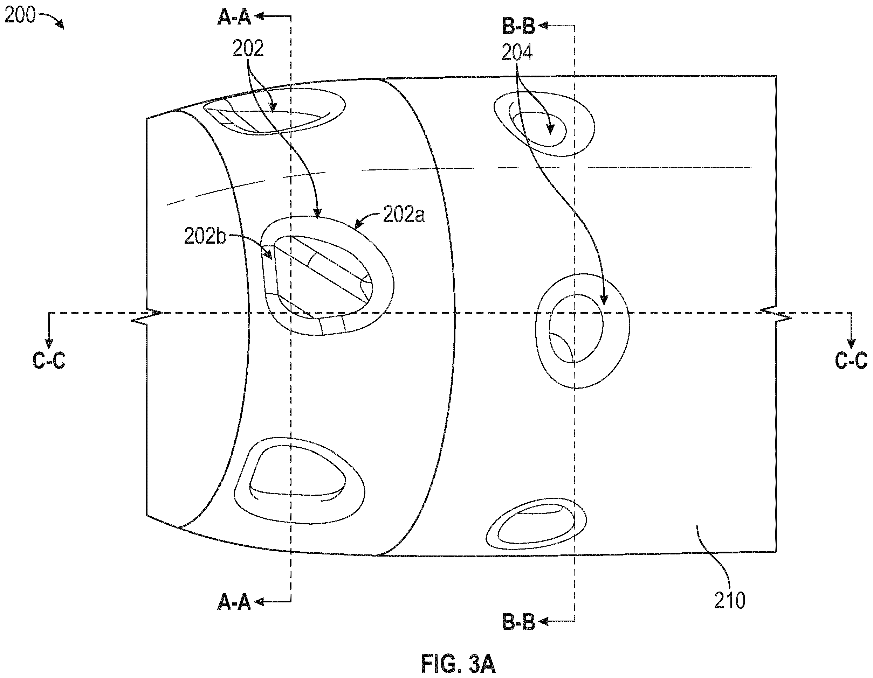

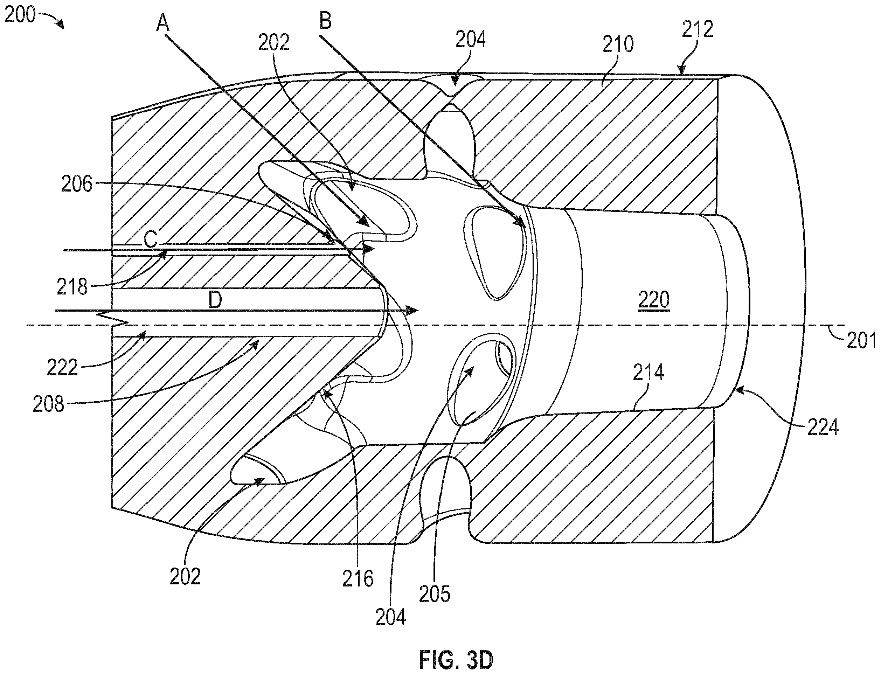

Referring to FIGS. 3A-3D, schematic views of a mixer 200 according to the invention are shown. Referring to FIG. 3A, a partial perspective view of the mixer 200 is shown. The mixer 200 includes a first set of openings 202. Each opening 202 may be D-shaped. That is, the openings 202 may have a generally curved surface 202a and a generally flat surface 202b such that the opening 202 appears as a "D" in plan view. The flat surface 202b may be upstream of the opening 202 such that the flow is captured or directed along the outer surface of the mixer 200 and into the opening 202. The entire cross-section of the opening 202 may exhibit a D-shape. The D-shaped opening 202 may introduce air in a forward swirling jet that may prevent low-velocity flow on the conical surface 216 (FIG. 3D). Other shapes of openings 202 may be contemplated so long as the shape allows for introduction of air in a forward swirling jet to prevent low-velocity flow on the conical surface. The first set of openings 202 introduces the first air flow A (shown in FIG. 3D) into the mixer 200.

With continued reference to FIG. 3A, the mixer 200 includes a second set of openings 204. The openings 204 extend through a body 210 of the mixer 200. Each opening 204 may be a tangential opening. That is, the opening 204 may have a surface 205 (FIG. 3D) that is tangential to the mixer body. The openings 204 may be circular in cross-section or other shaped air jets. Referring briefly to FIG. 3D, the openings 204 may introduce air closer to the wall 214 of interior passage 220 of the mixer 200 as compared to the openings 202 (which may introduce air closer to a center of the interior passage 220). The second set of openings 204 may introduce air to create a high near wall velocity that may avoid a fuel flow from approaching the inner wall 214. That is, the air flow through the openings 204 may create an air boundary layer along the inner wall 214. The air flow through the openings 202 may be a high velocity air flow. The first set of openings 202 may introduce the first air flow A and the second set of openings 204 may introduce the second air flow B into the mixer 200.

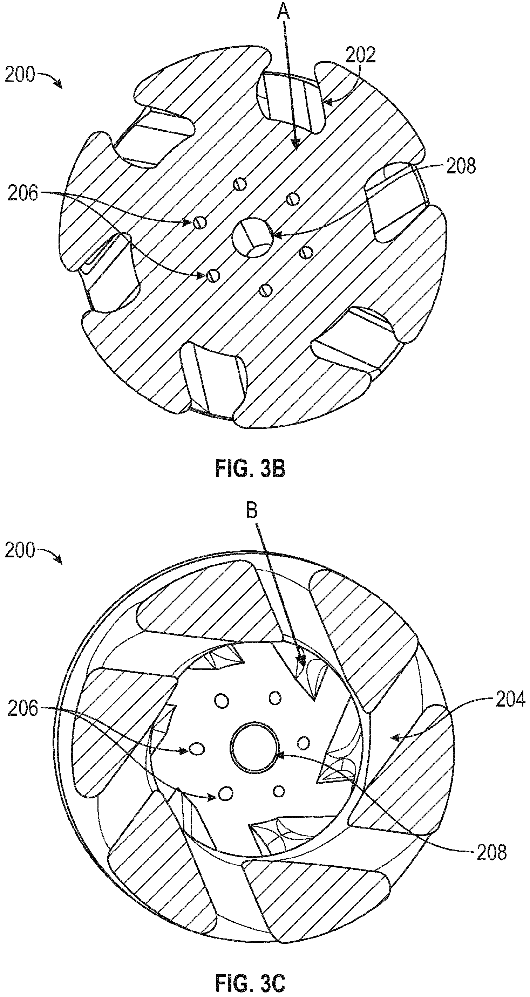

Referring to FIGS. 3B and 3C section views of the mixer 200 in FIG. 3A are shown. In particular FIG. 3B shows a view of the first set of openings 202 taken along the section line A-A of FIG. 3A and FIG. 3C shows a view of the second set of openings 204 taken along the section line B-B of FIG. 3A. As shown, there are six openings 202 placed around the circumference of the mixer 200 and six openings 204 placed around the circumference of the mixer 200. More or fewer openings 202, 204 may be provided based on the desired flow characteristics and fuel-air mixing. Also visible in FIGS. 3B and 3C are the one or more fuel inlets 206. The fuel inlets 206 may be located circumferentially around a central air jet 208. The fuel inlets 206 may be offset from the central axis 201 (FIG. 3D) depending on the location and application of the mixer 200. As mentioned, the first air flow A may flow through the openings 202 and the second air flow B may flow through the openings 204.

Referring to FIG. 3D, a cross-section view of the mixer 200 is shown. The mixer 200 includes a mixer body 210 having an outer surface 212 and an inner wall 214. The first set of openings 202 and the second set of openings 204 extend through the body 210 from the outer surface 212 to the inner wall 214. The body 210 includes a conical surface 216. As mentioned, the body 21 includes one or more fuel inlets 206 having a fuel passage 218 for delivering fuel flow C to an interior passage 220 of the mixer 200. The body 210 includes a central air jet 208 having a passage 222 for delivering central air flow D to the interior passage 220. The air flow D pulls the fuel along through the passage 222 of the mixer 200. The air flow A impinges on the conical surface 216 to push fuel toward the core (e.g., toward the central axis 201). The air flows A and B introduce a swirling flow due to the inclination of the air flow with respect to the passage 222. The inclination of air flows A and B intentionally imparts a swirling flow into the mixer.

With continued reference to FIG. 3D, the flows A and B are introduced at angle such that the flows A and B push the fuel flow C into the passage 220 and away from the inner wall 214. This allows for the mixture of the fuel and air to be kept away from the boundary layer. Flow A accomplishes this by impinging on the conical surface 216 to push the fuel toward the core. Flow B accomplishes this by staying near and/or adhering to the inner wall 214 to create high velocity in a boundary layer to prevent fuel flow from migrating to the inner wall 214. The location, size, and angle of the openings 202, 204, 206, and 208 may be selected based on a desired fuel/air distribution and a desired flow at the exit 224 of the mixer 200.

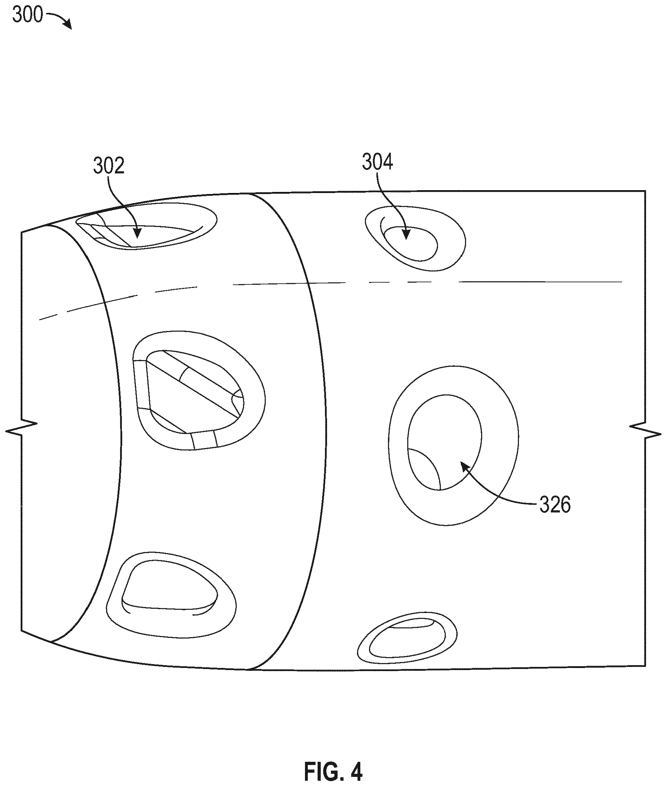

Referring to FIG. 4, a partial perspective view of a mixer 300 is shown. The mixer 300 may be the mixer 102 provided in the mixer array 100 of FIG. 1. The mixer 300 may include a first set of openings 302. The first set of openings 302 may be the same as the openings 202 and may introduce flow to an interior of the mixer 300 in the same manner. The mixer 300 may include a second set of openings 304. The openings 304 may be the same as the openings 204 and may introduce flow to an interior of the mixer 300 in the same manner.

With continued reference to FIG. 4, the mixer 300 may include one or more openings 326. The openings 326 may extend through the body of the mixer 300 in the same manner as the openings 302. Each of the openings 326 may be larger in diameter than an individual one of the openings 304. By presenting openings 304 of a smaller diameter than openings 326, circumferential staging of air may occur. That is, flows of higher velocity and lower velocity and with other differing flow characteristics may be patterned around the circumference of the mixer 300. This may allow for different fuel distribution at the mixer exit *(e.g.,* 224 in FIG. 3D). This may result in changes in heat release and assist in promoting desired flow dynamics. Although shown as a single opening 326, multiple openings 326 may be presented in an alternating pattern with openings 304. In some examples, the openings 326 and 304 may be presented in any pattern around the circumference of the mixer 300 *(e.g.,* two openings 326, one opening 304, repeat, or vice versa, etc.). Any pattern of the openings 304, 326 may be presented based on the desired flow at the exit of the mixer 300.

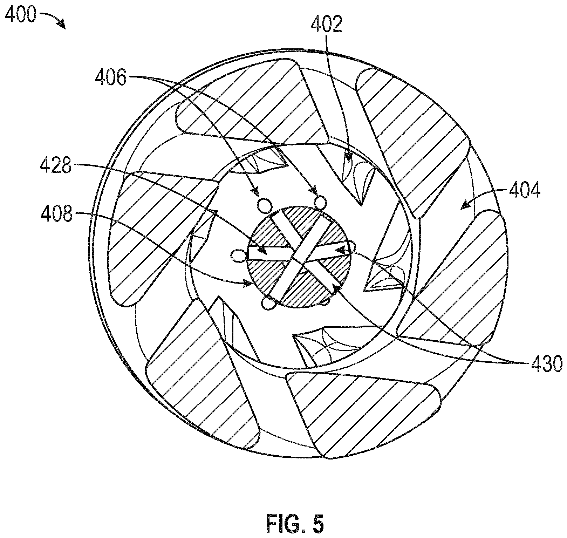

Referring to FIG. 5, a cross-section view of a mixer 400 is shown. The mixer 400 may be the mixer 102 provided in the mixer array 100 of FIG. 1. The mixer 400 may be the same or similar as the mixer 200. For example, the mixer 400 may include a first set of openings 402. The first set of openings 402 may be the same as the openings 202 and may introduce flow to an interior of the mixer 400 in the same manner. The mixer 400 may include a second set of openings 404. The openings 404 may be the same as the openings 204 and may introduce flow to an interior of the mixer 400 in the same manner. The mixer 400 may include one or more fuel inlets 406. The fuel inlets 406 may be the same as the fuel inlets 206 and may introduce fuel flow to an interior of the mixer 400 in the same manner. The mixer 400 may include a central air opening 408 that may be the same as the central air jet 208.

With continued reference to FIG. 5, the central air opening 408 may include a stationary vane 428. The stationary vane 428 may include one or more vane members 430. The stationary vane 428 may operate as a central axial swirler. The stationary vane 428 may thus introduce the air flow D (FIG. 2D) in a swirling fashion (due to air flowing past the vane members 430 of the stationary vane 428). The stationary vane 428 may introduce a low swirl to the air flow D to improve radial spread of the fuel/air mixture.

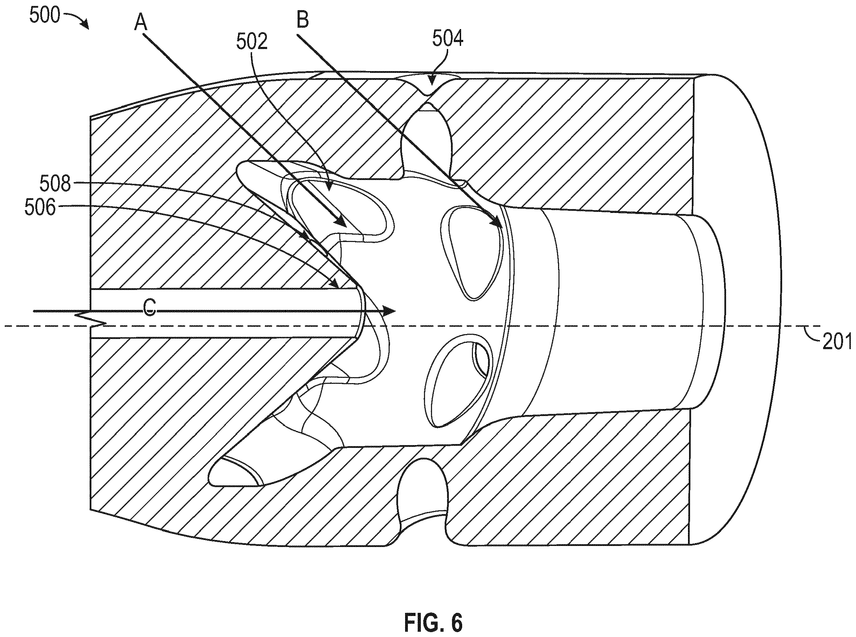

Referring to FIG. 6, a cross-section view of a mixer 500 is shown. The mixer 500 may be the mixer 102 provided in the mixer array 100 of FIG. 1. The mixer 500 may include a first set of openings 502. The first set of openings 502 may be the same as the openings 202 and may introduce flow A to an interior of the mixer 500 in the same manner. The mixer 500 may include a second set of openings 504. The openings 504 may be the same as the openings 204 and may introduce flow B to an interior of the mixer 500 in the same manner.

With continued reference to FIG. 6, the fuel inlet 506 may be a central fuel inlet 506 (in comparison to the radially placed fuel inlets 206). The fuel inlet 506 may introduce the fuel flow C along the central axis 501 of the mixer 500. The central air jet 508 may be located radially around and parallel with the central fuel inlet 506. Thus, the air flow may be introduced parallel to the fuel flow C. The fuel in FIG. 6 is injected from the center or at a radial offset distance relative to the mixer central axis 501. Different tubes (*e.g*., different mixers in the array 100 may have different offset directions to create changes to heat release at the exit of the mixer array. The fuel inlet 506 may be a single orifice or multiple orifices.

The mixers described herein (*e.g*., mixers 200, 300, 400 and 500) may be the mixer 102 provided in the mixer array 100 of FIG. 1. As mentioned, some or all of the mixers 102 in the mixer array 100 of FIG. 1 may be any of the mixers described herein. For example, zone A may include a first mixer type (*e.g.,* any of mixers 200, 300, 400 and 500), zone B may include a second mixer type and zone C may include a third mixer type. Each of the first mixer type, second mixer type, and third mixer type may be the same or different. In some examples, zone A may be the same as zone B and different from zone C. In some examples, zone A may be different than both zone B and zone C. In some examples, the mixers within a single zone may be different. In some examples zone A may have different mixer types within the mixer zone itself. That is, zone A may include mixer 200 and mixer 300, for example. Any combination of mixers may be presented in the array. It is understood that the particular mixer type for a particular mixer 102 in the array 100 may be selected based on the desired operation and flow characteristics desired at that location. Thus, each individual mixer 102 may be individually selected. This may result in all mixers 102 being different, all mixers 102 being the same, or any combination of mixers being presented in the array 100. The mixers presented in each zone may be independently and separately selected and controlled.

The mixers described herein may include a third set of openings for introducing air to the central passage. Three or more sets of openings may be contemplated. The third set of openings may be located axially farther away from the fuel inlet. The third set of openings may include a separate passage and opening. The third set of openings may include a passage that branches from the passage of the second set of openings and extends to a third outlet.

In the mixer, the number of sets of openings may be based on the desired amount of air flow to be mixed into the fuel. The number of sets of openings, the number of openings within a set, the size of the openings, the location of the openings, the inclination of the openings, or any combination thereof may depend on how much air is available to the system and what is the desired fuel-air mixture at the output of the mixer.

As described herein, the mixers of the present disclosure may reduce the flashback/flame-holding risk.. In conventional mixer a recirculation zone exists on the center body where high H2 fuel may become trapped due to a low-velocity zone, resulting in flame-holding. The conventional mixer of FIG. 2 is also of a longer mixer length, as compared to mixers described in FIGS. 3-6, which may result in higher residence time of the fuel within the mixer and thus higher flame-holding risk. This conventional mixer may result in lower H2 fuel blending capability. The conventional mixer may include low-velocity fuel pockets that may encourage flame-holding.

The high velocity central jets of air may create a low pressure driving the fuel toward the center.. The flame is stabilized due to the swirl and flow dynamics presented by the mixer of the present disclosure. There is little or no fuel exists close to the mixer wall. The mixer of present disclosure creates compact flame structure and low and uniform downstream temperature. The mixer of the present disclosure thus allows for no low-velocity region in the mixer and instead provides higher velocity near the outer mixer wall to prevent fuel from approaching the boundary layer. The fuel may be distributed in the center, away from the mixer outer diameter. The mixer of the present disclosure may have a short mixing length (as compared to the prior art mixers) resulting in smaller residence time.

The hydrogen fuel percentage may vary from a volume percentage of the fuel blend between 0% to 100%. The hydrogen fuel percentage may vary from a volume percentage of the fuel blend between 10% to 100%. The hydrogen fuel percentage may vary from a volume percentage of the fuel blend between 20% to 100%. The hydrogen fuel percentage may vary from a volume percentage of the fuel blend between 30% to 100%. The hydrogen fuel percentage may vary from a volume percentage of the fuel blend between 40% to 100%. The hydrogen fuel percentage may vary from a volume percentage of the fuel blend between 50% to 100%. The hydrogen fuel percentage may vary from a volume percentage of the fuel blend between 60% to 100%. The hydrogen fuel percentage may vary from a volume percentage of the fuel blend between 70% to 100%. The hydrogen fuel percentage may vary from a volume percentage of the fuel blend between 80% to 100%. The hydrogen fuel percentage may vary from a volume percentage of the fuel blend between 90% to 100%. The hydrogen fuel percentage may vary from a volume percentage of the fuel blend between 55% to 95%. The hydrogen fuel percentage may vary from a volume percentage of the fuel blend between 60% to 90%. The hydrogen fuel percentage may vary from a volume percentage of the fuel blend between 65% to 85%. The hydrogen fuel percentage may vary from a volume percentage of the fuel blend between 70% to 80%. The hydrogen fuel percentage may vary from a volume percentage of the fuel blend between 85% to 100%. The hydrogen fuel percentage may vary from a volume percentage of the fuel blend between 95% to 100%. The hydrogen fuel percentage may vary from a volume percentage of the fuel blend of about 55%, 65%, 70%, 75%, 80%, 85%, 90%, 95%, or 100%. The mixer of the present disclosure may allow for burning of 100% hydrogen fuel in an engine.

Enhanced mixing (as compared to prior art mixing), such as provided by the mixers disclosed herein, may keep NOx emissions down. The mixers of the present disclosure keep the fuel flow away from the inner wall of the mixer, that is, away from the boundary layer air flow. By maintaining the fuel flow away from the inner wall, flash-back/flame holding risk is reduced, different stages of air helps to achieve uniform fuel-air mixing within mixer passage that helps keep NOx emissions low.

Of particular note with respect to the mixers of the present disclosure is the ability to 1) inject the fuel near the center of the mixer and have no or very little fuel near the inner wall of the mixer; 2) introduce air at a high velocity and momentum to maintain the fuel toward the center of the mixer; and 3) provide swirling jets of air near the inner wall to prevent the fuel from approaching the inner wall of the mixer. A mixer with the aforementioned principles may achieve lower emissions and lower flash-back/flame-holding risk, allowing for higher content hydrogen fuels to be burned.

The mixer of the present disclosure may reduce or eliminate carbon emission by achieving burning of varying blends of H2 fuel. The percentage of H2 in the fuel may vary from 0% to 100% H2 and any incremental value therebetween. The percentage of H2 fuel may be blended to achieve lower NOx and CO emissions. The percentage of H2 fuels may be selected or predetermined based on emissions requirements of a jurisdiction or system and/or based on a desired performance of the engine. The burning of H2 fuel may ensure the lowering of NOx emissions. The mixer of the present disclosure may provide a distribution of air and fuel mixture that removes auto-ignition, flash-back, flame-holding risk of a pure premixed burner/mixer design with high H2 fuel blends.

The mixer of the present disclosure may include a central high velocity axial air jet. The central jet may create a low pressure in the center of the mixer tubes. This central low pressure may allow for blends of H2 fuel to remain at the center of the mixer tube and away from the premixer outer wall. This may avoid flame-holding risk within the mixer tube. The central air jet may have a low swirl to improve radial spread of the fuel-air mixture.

The H2 fuel, or blends thereof, may be injected from a conic surface at an angle *(e.g.,* any increment of 0 degrees to 90 degrees with respect to the central mixer axis). The mixer of the present disclosure may attain smaller compact flames due to the array of tubes. The system of the present disclosure may be employed with fuel mixtures, that is multiple fuels may be injected through different mixers. For example, one or more of the mixer tubes in zones A and C (FIG. 2) may have H2 fuel while zone B may have a natural gas fuel. This may achieve lower NOx and CO emissions. The fuel may be injected from a center or injected at a radial offset distance relative to the mixer center line. Different tubes in the array may have different offset directions to create changes to the heat release at the mixer array exit. One or a plurality of fuel orifices may be provided.

A primary air flow, either swirling or non-swirling, may be introduced on a conic surface that creates high velocity flow on the conic tip. The air introduced at this angle may keep the fuel in the center line of the mixer. The primary air flow may include aft swirling holes that may have an angle relative to the central mixer axis. This may streamline the flow closer to the outer wall of the mixer.

The mixer of the present disclosure may include a second set of vanes that may introduce a secondary, low swirling air either in the same direction (*e.g*., co-swirling) or in a counter direction to the aforementioned air. This may create a sheet of high velocity air closer to the outer wall of the mix that may prevent the fuel from approaching the outer wall boundary layer. The combination of the central non-swirling jet and the co-swirled stream from the conic surface and outer mixer wall may create unique flow structure that maintains high velocity and higher fuel concentration in the core of the mixer which may lower flame-holding and generate lesser emissions.

Accordingly, the present disclosure presents a mixer that allows for circumferential staging of air (by making some of the air inlet holes smaller than the remaining air inlet holes). This may allow for a particular fuel distribution pattern to be achieved at the mixer exit that may create changes in heat release and assist in dynamics. A shear between the compounded impinged swirling air *(e.g.,* the primary and secondary air flows) and the strong core jet *(e.g.,* the fuel flow) may create a desired fuel: air ratio at the exit of the mixer. Further mixing of the fuel-air mixture may take place after the mixer exit before the flame front surface due to the swirl induced by the flow structures. The mixer of the present disclosure provides an array of compact and swirled flames.

The mixer of the present disclosure has applications in aero-derivative engines, other gas turbine engines, and applications outside of the gas turbine application. The mixer of the present disclosure may allow for burning of 100% hydrogen fuel in an engine *(e.g.,* a DLE engine). The burning of up to 100% hydrogen fuel capability may allow for zero carbon footprint, which may allow for merging with renewables while requiring little or no water for achieving a lower NOx emission.

Although the foregoing description is directed to the preferred embodiments, it is noted that other variations and modifications will be apparent to those skilled in the art, and may be made without departing from the scope of the disclosure. Moreover, features described in connection with one embodiment may be used in conjunction with other embodiments, even if not explicitly stated above. The scope of protection is defined by the appended claims.

## Claims

1. A mixer (200) configured to provide a fuel-air mixture to a combustor of an engine, the mixer comprising:
a mixer body (210) having an outer surface (212), an inner wall (214), an interior passage (220), and a central axis (201);
a fuel inlet (206) located parallel to the central axis (201), the fuel inlet (206) having a fuel passage (218) and configured to introduce a fuel flow (C) to the interior passage (220) of the mixer body (210);
a central air jet (208) located parallel to the central axis (201);
a first set of openings (202) inclined with respect to the central axis (201); and
a second set of openings (204) having an inlet surface tangential to the mixer body (210),
wherein the central air jet (208) delivers, in use, a central air flow (D) to the interior passage (220) of the mixer body (210), the first set of openings (202) introduces, in use, a first air flow (A) to the interior passage (220) of the mixer body (210), and the second set of openings (204) introduces, in use, a second air flow (B) to the interior passage (220) of the mixer body (210),
and
wherein the first set of openings (202) and the second set of openings (204) are located circumferentially around the outer surface (212) of the mixer body (210),
wherein the first set of openings (202) and the second set of openings (204) extend through the mixer body (210) from the outer surface (212) to the inner wall (214),
wherein the mixer body (210) includes a conical surface (216),
wherein the central air flow (D) pulls, in use, the fuel along through the passage (222) of the mixer (200),
wherein the first air flow (A) impinges, in use, on the conical surface (216) to push fuel toward the central axis (201) and creates, in use, an air boundary layer along the inner wall (214),
wherein the first and second air flows (A) and (B) introduce, in use, a swirling flow due to the inclination of the air flow with respect to the passage (222),
wherein the inclination of the first and second air flows (A) and (B) imparts, in use, a swirling flow into the mixer (200),
wherein the first and second air flows (A) and (B) are introduced, in use, at such an angle such that the first and second air flows (A) and (B) push the fuel flow (C) into the passage (220) and away from the inner wall (214) allowing for the mixture of the fuel and air to be kept away from the boundary layer,
wherein the first air flow (A) impinges, in use, on the conical surface (216) to push the fuel toward the central axis (201), and
wherein the second air flow (B) stays, in use, near and/or adheres to the inner wall (214) to create high velocity in a boundary layer to prevent fuel flow from migrating to the inner wall (214).

2. The mixer of any preceding claim, wherein the fuel inlet (206) or the central air jet (208) has a central axis coincident with the central axis (201) of the mixer body (200; 500).

3. The mixer of any preceding claim, wherein the second set of openings includes one or more first openings (304) and one or more second openings (326), the one or more second openings (326) being larger than the one or more first openings (304), and wherein the second set of openings (326) are located circumferentially around the outer surface (212) of the mixer body (210).

4. The mixer of any preceding claim, further comprising a stationary vane (428) within the central air jet (208), the stationary vane (428) configured to swirl an air flow through the central air jet (208).

5. A mixer array (100) comprising one or more mixers according to any preceding claim.

## Patentansprüche

1. Mischer (200), der konfiguriert ist, um ein Brennstoff-Luft-Gemisch an eine Brennkammer eines Motors bereitzustellen, der Mischer umfassend:
einen Mischerkörper (210) mit einer äußeren Oberfläche (212), einer Innenwand (214), einem Innendurchgang (220) und einer Mittelachse (201);
einen Brennstoffeinlass (206), der parallel zur Mittelachse (201) positioniert ist, wobei der Brennstoffeinlass (206) einen Brennstoffdurchgang (218) aufweist und konfiguriert ist, um einen Brennstoffstrom (C) in den Innendurchgang (220) des Mischerkörpers (210) einzuführen;
eine mittlere Luftdüse (208), die parallel zur Mittelachse (201) positioniert ist;
einen ersten Satz von Öffnungen (202), die in Bezug auf die Mittelachse (201) geneigt sind; und
einen zweiten Satz von Öffnungen (204) mit einer Einlassoberfläche tangential zum Mischerkörper (210),
wobei die mittlere Luftdüse (208) im Gebrauch einen mittleren Luftstrom (D) zum Innendurchgang (220) des Mischerkörpers (210) zuführt, der erste Satz Öffnungen (202) im Gebrauch einen ersten Luftstrom (A) in den Innendurchgang (220) des Mischerkörpers (210) einführt, und der zweite Satz Öffnungen (204) im Gebrauch einen zweiten Luftstrom (B) in den Innendurchgang (220) des Mischerkörpers (210) einführt,
und
wobei der erste Satz Öffnungen (202) und der zweite Satz Öffnungen (204) sich in Umfangsrichtung um die äußere Oberfläche (212) des Mischerkörpers (210) befinden,
wobei sich der erste Satz Öffnungen (202) und der zweite Satz Öffnungen (204) durch den Mischerkörper (210) von der äußeren Oberfläche (212) bis zur Innenwand (214) erstrecken,
wobei der Mischerkörper (210) eine konische Oberfläche (216) einschließt,
wobei der mittlere Luftstrom (D) im Gebrauch den Brennstoff durch den Durchgang (222) des Mischers (200) zieht,
wobei der erste Luftstrom (A) im Gebrauch auf die konische Oberfläche (216) trifft, um Brennstoff in Richtung der Mittelachse (201) zu drücken, und im Gebrauch eine Luftgrenzschicht entlang der Innenwand (214) erzeugt,
wobei der erste und der zweite Luftstrom (A) und (B) im Gebrauch aufgrund der Neigung des Luftstroms in Bezug auf den Durchgang (222) eine Wirbelströmung erzeugen,
wobei die Neigung des ersten und zweiten Luftstroms (A) und (B) im Gebrauch eine Wirbelströmung in den Mischer (200) erzeugt,
wobei der erste und der zweite Luftstrom (A) und (B) im Gebrauch in einem solchen Winkel eingeleitet werden, dass der erste und der zweite Luftstrom (A) und (B) den Brennstoffstrom (C) in den Durchgang (220) und weg von der Innenwand (214) drücken, wodurch das Gemisch aus Brennstoff und Luft von der Grenzschicht ferngehalten werden kann,
wobei der erste Luftstrom (A) im Gebrauch auf die konische Oberfläche (216) trifft, um den Brennstoff in Richtung der Mittelachse (201) zu drücken, und
wobei der zweite Luftstrom (B) im Gebrauch in der Nähe der Innenwand (214) verbleibt und/oder daran haftet, um eine hohe Geschwindigkeit in einer Grenzschicht zu erzeugen und zu verhindern, dass der Brennstoffstrom zur Innenwand (214) wandert.

2. Mischer nach einem der vorstehenden Ansprüche, wobei der Brennstoffeinlass (206) oder die mittlere Luftdüse (208) eine Mittelachse aufweist, die mit der Mittelachse (201) des Mischerkörpers (200; 500) zusammenfällt.

3. Mischer nach einem der vorstehenden Ansprüche, wobei der zweite Satz von Öffnungen eine oder mehrere erste Öffnungen (304) und eine oder mehrere zweite Öffnungen (326) einschließt, wobei die eine oder mehreren zweiten Öffnungen (326) größer sind als die eine oder mehreren ersten Öffnungen (304), und wobei der zweite Satz von Öffnungen (326) in Umfangsrichtung um die äußere Oberfläche (212) des Mischerkörpers (210) positioniert ist.

4. Mischer nach einem der vorstehenden Ansprüche, ferner umfassend eine stationäre Schaufel (428) innerhalb der mittleren Luftdüse (208), wobei die stationäre Schaufel (428) konfiguriert ist, um einen Luftstrom durch die mittlere Luftdüse (208) zu wirbeln.

5. Mischeranordnung (100), umfassend einen oder mehrere Mischer nach einem der vorstehenden Ansprüche.

## Revendications

1. Mélangeur (200) conçu pour fournir un mélange carburant-air à une chambre de combustion d'un moteur, le mélangeur comprenant :
un corps de mélangeur (210) ayant une surface extérieure (212), une paroi intérieure (214), un passage intérieur (220) et un axe central (201) ;
une entrée de carburant (206) située parallèlement à l'axe central (201), l'entrée de carburant (206) ayant un passage de carburant (218) et conçue pour introduire un flux de carburant (C) dans le passage intérieur (220) du corps du mélangeur (210) ;
un jet d'air central (208) situé parallèlement à l'axe central (201) ;
une première série d'ouvertures (202) inclinées par rapport à l'axe central (201) ; et
une seconde série d'ouvertures (204) ayant une surface d'entrée tangentielle au corps de mélangeur (210),
dans lequel le jet d'air central (208) fournit, en cours d'utilisation, un flux d'air central (D) au passage intérieur (220) du corps de mélangeur (210), le premier ensemble d'ouvertures (202) introduit, en cours d'utilisation, un premier flux d'air (A) au passage intérieur (220) du corps de mélangeur (210), et le second ensemble d'ouvertures (204) introduit, en cours d'utilisation, un second flux d'air (B) au passage intérieur (220) du corps de mélangeur (210),
et
dans lequel la première série d'ouvertures (202) et la seconde série d'ouvertures (204) sont situées circonférentiellement autour de la surface extérieure (212) du corps de mélangeur (210),
dans lequel la première série d'ouvertures (202) et la seconde série d'ouvertures (204) s'étendent à travers le corps de mélangeur (210) depuis la surface extérieure (212) jusqu'à la paroi intérieure (214),
dans lequel le corps de mélangeur (210) comporte une surface conique (216),
dans lequel le flux d'air central (D) tire, en cours d'utilisation, le carburant à travers le passage (222) du mélangeur (200),
dans lequel le premier flux d'air (A) impacte, en cours d'utilisation, la surface conique (216) pour pousser le carburant vers l'axe central (201) et crée, en cours d'utilisation, une couche limite d'air le long de la paroi intérieure (214),
dans lequel les premier et second flux d'air (A) et (B) introduisent, en cours d'utilisation, un flux tourbillonnant résultant de l'inclinaison du flux d'air par rapport au passage (222),
l'inclinaison des premier et second flux d'air (A) et (B) transmet, en cours d'utilisation, un flux tourbillonnant dans le mélangeur (200),
dans lequel les premier et second flux d'air (A) et (B) sont introduits, en cours d'utilisation, à un angle tel que les premier et second flux d'air (A) et (B) poussent le flux de carburant (C) dans le passage (220) et loin de la paroi intérieure (214), ce qui permet de maintenir le mélange de carburant et d'air à l'écart de la couche limite,
dans lequel le premier flux d'air (A) impacte, en cours d'utilisation, la surface conique (216) pour pousser le carburant vers l'axe central (201), et
dans lequel le second flux d'air (B) reste, en cours d'utilisation, près de la paroi intérieure (214) et/ou y adhère pour créer une vitesse élevée dans une couche limite afin d'empêcher le flux de carburant de migrer vers la paroi intérieure (214).

2. Mélangeur selon l'une quelconque revendication précédente, dans lequel l'entrée de carburant (206) ou le jet d'air central (208) a un axe central coïncidant avec l'axe central (201) du corps de mélangeur (200 ; 500).

3. Mélangeur selon l'une quelconque revendication précédente, dans lequel le second ensemble d'ouvertures comporte une ou plusieurs premières ouvertures (304) et une ou plusieurs secondes ouvertures (326), la ou les secondes ouvertures (326) étant plus grandes que la ou les premières ouvertures (304), et dans lequel le second ensemble d'ouvertures (326) est situé circonférentiellement autour de la surface extérieure (212) du corps de mélangeur (210).

4. Mélangeur selon l'une quelconque revendication précédente, comprenant en outre une aube fixe (428) dans le jet d'air central (208), l'aube fixe (428) conçue pour faire tourbillonner un flux d'air à travers le jet d'air central (208).

5. Réseau de mélangeurs (100) comprenant un ou plusieurs mélangeurs selon l'une quelconque revendication précédente.
